# EUROPÄISCHE PATENTSCHRIFT

(11) **EP 3 183 476 B1**
(45) Veröffentlichungstag und Bekanntmachung des Hinweises auf die Patenterteilung: **11.07.2018**
(21) Anmeldenummer: 15778641.9
(22) Anmeldetag: 08.10.2015
(51) Int. Cl.: F16H 57/02

(54) **GESTUFTE TEILFUGE AN EINEM GETRIEBEGEHÄUSE**
STEPPED SPLIT LINE OF A TRANMISSION CASE
JOINT ÉCHÉLONNÉ D'UNE BOÎTE DE TRANSMISSION

(30) Priorität: 21.10.2014 DE 102014221339
(43) Veröffentlichungstag der Anmeldung: 28.06.2017
(73) Patentinhaber: Siemens Aktiengesellschaft, 80333 München (DE)
(72) Erfinder: WEULE, Jan, Verstorben (DE)
(86) Internationale Anmeldenummer: PCT/EP2015/073254
(87) Internationale Veröffentlichungsnummer: WO 2016/062549

(56) Entgegenhaltungen:
- CN-U- 203 162 097
- DE-A1-102011 003 525
- FR-A1- 2 234 490
- US-A- 1 862 512
- US-A- 5 287 769

## Beschreibung

Die Erfindung betrifft ein teilbares Gehäuse für ein Getriebe, insbesondere für ein Getriebe einer Fluidmaschine, wie beispielsweise eines Getriebeturboverdichters, sowie eine Fluidmaschine mit einem solchen teilbaren Gehäuse.

Verdichter bzw. fluidekomprimierende Vorrichtungen werden in verschiedenen Industriebereichen für verschiedene Anwendungen genutzt, bei denen es um eine Kompression oder Verdichtung von Fluiden, im Speziellen (Prozess-)Gasen, geht. Bekannte Beispiele hierfür sind Turboverdichter in mobilen industriellen Anwendungen, wie in Abgasturboladern oder in Strahltriebwerken, oder auch in stationären industriellen Anwendungen, wie Getriebe- bzw. Getriebeturboverdichter für eine Luftzerlegung.

Bei einem solchen - in seiner Arbeitsweise kontinuierlich arbeitenden - Turboverdichter wird die Druckerhöhung (Verdichtung) des Fluids dadurch bewirkt, dass ein Drehimpuls des Fluids von Eintritt zu Austritt durch ein rotierendes, radial erstreckende Schaufeln aufweisendes Laufrad des Turboverdichters durch die Rotation von den Schaufeln erhöht wird. Hier, d.h. in einer solchen Verdichterstufe, steigen Druck und Temperatur des Fluids, während die relative (Strömungs-)Geschwindigkeit des Fluids im Laufrad bzw. Turbolaufrad sinkt.

Um eine möglichst hohe Druckerhöhung bzw. Verdichtung des Fluids zu erreichen, können mehrere solcher Verdichterstufen hintereinander geschaltet werden.

Als Bauformen von Turboverdichtern unterscheidet man zwischen Radial- und Axialverdichtern.

Bei dem Axialverdichter strömt das zu komprimierende Fluid, beispielsweise ein Prozessgas, in paralleler Richtung zur Achse (Axialrichtung) durch den Verdichter. Bei dem Radialverdichter strömt das Gas axial in das Laufrad der Verdichterstufe und wird dann nach außen (radial, Radialrichtung) abgelenkt. Bei mehrstufigen Radialverdichtern wird damit hinter jeder Stufe eine Strömungsumlenkung notwendig.

Kombinierte Bauarten von Axial- und Radialverdichtern saugen mit ihren Axialstufen große Volumenströme an, die in den anschließenden Radialstufen auf hohe Drücke komprimiert werden.

Während meist einwellige Maschinen zum Einsatz kommen, sind bei (mehrstufigen) Getriebeturboverdichtern (kurz im Folgenden auch nur Getriebeverdichter) die einzelnen Verdichterstufen um ein auf einer (Großrad-)Welle angeordnetes Großrad/-ritzel (kurz im Folgenden nur Großrad) herum gruppiert, wobei mehrere parallele (Ritzel-)Wellen, die jeweils ein oder zwei - in als Gehäuseanbauten realisierte Spiralgehäusen aufgenommene - Laufräder (an freien Wellenenden der Ritzelwellen angeordnete Turbolaufräder) tragen, von einem großen, im Gehäuse gelagerten Antriebszahnrad/-ritzel, dem Großrad, angetrieben werden.

Ein solcher Getriebeverdichter, ein Getriebeverdichter der Firma Siemens mit der Bezeichnung STC-GC, eingesetzt für die Luftzerlegung, ist aus http://www.energy.siemens.com/hq/de/verdichtung-expansion-ventilation/turboverdichter/getriebeturboverdichter/stc-gc.htm (erhältlich am 10.09.2014) bekannt.

Bei einem Getriebeverdichter erfolgen der Antrieb und damit eine Leistungsübertragung vom Großrad auf die Wellen bzw. Ritzelwellen durch ineinandergreifende bzw. -kämmende Verzahnungen bei Großrad und Ritzelwelle. Über unterschiedliche Zähnezahlen der Verzahnungen bzw. unterschiedliche Teilkreisdurchmesser werden gewünschte Übersetzungen bzw. Übersetzungsverhältnisse (Leistungsstufen) in den einzelnen Getriebestufen realisiert. D.h., die einzelnen Ritzelwellen sind in Verzahnungsgeometrie und Ritzelwellenmittenposition (Mittelpunkt bzw. Drehachse einer Ritzelwelle) zum Großrad hin und untereinander gekoppelt.

Bei Anordnung von mehreren Ritzelwellen um das Großrad muss ein Kompromiss aus idealen und realisierbaren Übersetzungsverhältnissen gefunden werden.

Eine maßgeblich bestimmende und limitierende Größe ist dabei der zur Verfügung stehende und/oder realisierbare Bauraum, insbesondere der den außerhalb des Gehäuses - als Gehäuseanbauten - an den Ritzelwellenenden angeordneten, strömungsführenden Bauteilen (Spiralgehäusen) zur Verfügung stehende Platz.

Der Kopplung der Ritzelwellen mit dem Großrad über Verzahnungsgeometrie und Ritzelwellenmittenposition kommt bei Entwicklung und Auslegung sowie Konstruktion und Bau von Getriebeturbomaschinen damit eine zentrale Bedeutung zu. Aufgrund der Größenverhältnisse bzw. Größenunterschiede, d.h. aufgrund des sehr viel größeren Großrades im Vergleich zu den dazu vielfach kleineren, um das Großrad anzuordnenden Ritzelwellen, stellt sich insbesondere die Frage nach der Lage der Ritzelwellen bzw. deren Ritzelwellenmittenpositionen.

In üblicher Anordnung liegen zwei Ritzelwellen in einer ersten, ungeteilten und waagrechten Teilfuge mit dem Großrad bzw. dessen Großradwelle. D.h., alle drei Wellen liegen in einer/m ((gemeinsamen) horizontalen, waagrechten) Ebene/Niveau. Eine dritte Ritzelwelle ist oberhalb des Großrads in einer zweiten, ungeteilten und waagrechten Teilfuge angeordnet.

Es ergeben sich bei dieser Anordnung sechs freie Wellenenden an den insgesamt drei Ritzelwellen, welche - mit Turbolaufrädern bestückt - eine mehrstufige Getriebeturbomaschine mit sechs möglichen Prozessstufen realisierbar machen.

Um eine Verdichtungsleistung eines solchen sechsstufigen Getriebeverdichters zu erhöhen, ist es bekannt, die Anzahl der Prozessstufen, beispielsweise durch eine vierte Ritzelwelle (mit dann acht Stufen bei dem Getriebeverdichter), zu erhöhen.

Dabei wird gefordert, diese vierte Ritzelwelle wirtschaftlich und mit überschaubarem konstruktivem und montagetechnischem Aufwand im Gehäuse des Getriebeverdichters unterzubringen.

Zwei Ansatzweisen für die Anordnung einer solchen vierten Ritzelwelle sind bekannt:
a) Anordnung der vierten Ritzelwelle oberhalb des Großrads zusammen mit der dritten Ritzelwelle in der zweiten, ungeteilten und waagrechten zweiten Teilfuge.
   Bei Anordnung der vierten Ritzelwelle oberhalb des Großrads muss der zur Verfügung stehende Bauraum mit der dritten Ritzelwelle geteilt werden. Für die Anordnung der dritten und der vierten Ritzelwelle in der Teilfuge sind Kollisionen von außen angeordneten, strömungsführenden Bauteilen (Spiralgehäuse) maßgeblich. Um Schnittstellen zu angrenzenden Funktionen (Lageraufnahme, Spiralanbindung) definieren zu können, wird die Teilfuge ungeteilt und waagrecht ausgeführt. D.h., auch die dritte und die vierte Ritzelwelle liegen in einer/m ((gemeinsamen) horizontalen, waagrechten) Ebene/Niveau.
   Um bei solcher Anordnung verschiedene Übersetzungen in den Getriebestufen zu realisieren, ist es bekannt, ein mehrfach verzahntes Großrad, beispielsweise als integrierte Einheit mit einem zweiten Großrad, einzusetzen. D. h., ein solches mehrfach verzahntes Großrad weist (axial) versetzte Verzahnungen auf, die jeweils mit unterschiedlichen Ritzelwellen kämmen.
   Dadurch werden zwar eine Vielzahl zusätzlicher Übersetzungsverhältnisse und daran gekoppelte Ritzelwellenmittenpositionen möglich, jedoch ist dies mit einem hohen Fertigungs- und Kostenaufwand verbunden.
b) Anordnung der vierten Ritzelwelle unterhalb des Großrads in Ausführung als Steckritzelwelle.

Bei Anordnung der vierten Ritzelwelle unterhalb des Großrads muss der Bauraum nicht mit einer benachbarten Ritzelwelle geteilt werden, allerdings ist dort keine Teilfuge vorhanden, die zur Montage genutzt werden kann.

Die Montage der vierten Ritzelwelle ist nur durch seitliches Einschieben (Stecken) möglich (Steckritzelwelle).

Dadurch können die Ritzelwellenmittenpositionen unter Berücksichtigung der Spiralgehäuse der ersten Teilfuge nahezu frei gewählt werden. Aber auch hier ist die Realisierung mit erheblichem Mehraufwand (Montageteile, Montagevorgang) und entsprechend hohen Kosten verbunden.

Es besteht somit ein Bedürfnis nach einem Gehäuse für ein Getriebe, insbesondere eines solchen Getriebeverdichters, welches unterschiedliche Übersetzungsverhältnisse des Getriebes bei geringem Fertigungs- und Kostenaufwand ermöglicht, bauraumoptimiert, einfach und kostengünstig zu realisieren und auch einfach und kostengünstig zu montieren ist.

Aus der DE 10 2011 003 525 A1 ist dazu ein achtstufiger Getriebeverdichter mit einem teilbaren Gehäuse und mit einem in dem teilbaren Gehäuse aufgenommenen Getriebe mit einem auf einer (Großrad-)Welle angeordneten Großrad und mit insgesamt vier dem Großrad im Eingriff stehenden Ritzelwellen bekannt.

Das teilbare Gehäuse aus der DE 10 2011 003 525 A1 weist drei übereinander angeordnete Gehäuseelemente, d.h. einen Deckel, einen Oberkasten und einen Unterkasten, auf, wobei zwischen dem Unterkasten und dem Oberkasten eine untere (erste) Teilfuge und zwischen dem Deckel und dem Oberkasten eine obere (zweite) Teilfuge ausgebildet ist.

Die obere (zweite) Teilfuge (zwischen Deckel und Oberkasten) weist einen als vertikale Stufe ausgebildeten Teilfugensprung auf, welcher zwei unterschiedliche horizontale Niveaus in der oberen (zweiten) Teilfuge ausbildet; die untere (erste) Teilfuge ist ungestuft und verläuft waagerecht.

Die DE 10 2011 003 525 A1 sieht dann weiter vor, dass in der unteren, ungestuften, waagrechten (ersten) Teilfuge die (Großrad-)Welle und zwei der vier Ritzelwellen (beiderseits der Großradwelle) (in einer/m gemeinsamen horizontalen, waagrechten Ebene/Niveau) aufgenommen sind. In der oberen, gestuften (zweiten) Teilfuge sind die anderen zwei Ritzelwellen beiderseits des Teilfugensprungs in den zwei unterschiedlichen horizontalen Niveaus aufgenommen.

Aus der DE 909 853 B ist zudem ein mehrstufiger Kreiselverdichter mit oben- und untenliegenden Steckritzelwellen bekannt.

Der Erfindung liegt die Aufgabe zugrunde, ein Gehäuse für ein Getriebe, insbesondere für ein Getriebe eines Getriebeverdichters, anzugeben, welches die Nachteile aus dem Stand der Technik verbessert, insbesondere unterschiedliche Übersetzungsverhältnisse des Getriebes bei geringem Fertigungs- und Kostenaufwand ermöglicht, bauraumoptimiert, einfach und kostengünstig zu realisieren und auch einfach und kostengünstig zu montieren ist.

Die Aufgabe wird durch ein teilbares Gehäuse für ein Getriebe, insbesondere für ein Getriebe einer Fluidmaschine, wie beispielsweise eines Getriebeturboverdichters, sowie eine Fluidmaschine mit einem solchen teilbaren Gehäuse mit den Merkmalen gemäß dem jeweiligen unabhängigen Patentanspruch gelöst.

Das teilbare Gehäuse umfasst zumindest ein erstes Gehäuseelement und ein mit dem ersten Gehäuseelement über eine Teilfuge verbundenes, zweites Gehäuseelement, beispielsweise einen (Gehäuse-)Unterkasten und einen (Gehäuse-)Oberkasten.

Das für die Aufnahme in dem teilbaren Gehäuse vorzusehende Getriebe weist eine Großradwelle und mit mindestens zwei mit einem auf der Großradwelle angeordneten Großrad im Eingriff stehenden Ritzelwellen auf.

Im Eingriff stehen kann hierbei heißen, dass das Großrad und die Ritzelwellen ineinandergreifende bzw. ineinanderkämmende Verzahnungen aufweisen. Beispielsweise kann die Verzahnung als Gerad- oder Schräg- oder Bogenverzahnung ausgeführt sein.

Erfindungsgemäß ist die Teilfuge derart ausgebildet, dass die Großradwelle und die mindestens zwei Ritzelwellen in Aufnahmen, zum Beispiel Lageraufnahmen bzw. Lagerschalen, an den Gehäuseelementen in der Teilfuge aufnehmbar sind.

Weiter ist vorgesehen, dass die Teilfuge einen ersten Teilfugensprung und einen zweiten Teilfugensprung (kurz vereinfacht und anschaulich, einen "zweifachen bzw. doppelten Teilfugensprung") aufweist, welche jeweils zwei unterschiedliche horizontale Niveaus in der Teilfuge ausbilden und welche jeweils zwischen zwei von den Aufnahmen von zwei von den Wellen angeordnet sind, beispielsweise zwischen den Aufnahmen für die Großradwelle und einer links von der Großradwelle angeordneten (linken) Ritzelwelle (erster Teilfugensprung) bzw. zwischen den Aufnahmen für die Großradwelle und einer rechts von der Großradwelle angeordneten (rechten) Ritzelwelle (zweiter Teilfugensprung).

Zudem ist vorgesehen, dass der erste und der zweite Teilfugensprung komplementär zueinander ausgebildet sind. Anschaulich und vereinfacht ausgedrückt, die Teilfuge weist hier eine (mittlere) erhöhte Ebene - flankiert von zwei abgesenkten Ebenen - auf ("auf den Kopf gestellter "U"-förmiger Verlauf der Teilfuge) bzw. die Teilfuge weist hier eine (mittlere) abgesenkte Ebene - flankiert von zwei erhöhten Ebenen auf ("U"-förmiger Verlauf der Teilfuge).

Unter einem Teilfugensprung ist dabei zu verstehen, dass die Teilfuge - beiderseits einer den ersten bzw. zweiten Teilfugensprung ausbildenden Übergangsstelle - zwei unterschiedliche horizontale Niveaus ausbildet. Der dadurch realisierbare Höhenunterschied (Sprunghöhe) über den ersten bzw. zweiten Teilfugensprung innerhalb der Teilfuge kann in weiten Bereichen beliebig sein, beispielsweise 10 mm bis 1000 mm oder 20 mm bis 500 mm, bevorzugt 30 mm bis 100 mm, insbesondere 60 mm. Eine Begrenzung erfolgt allenfalls durch die Größe des Großrades, die Größe der Ritzelwellen und/oder durch sich dadurch möglicherweise ergebender Kollisionen bei Anbauteilen.

Bevorzugt können diese unterschiedlichen Niveaus beiderseits des ersten bzw. zweiten Teilfugensprungs in der Teilfuge bzw. kann dieser erste bzw. zweite Teilfugensprung dadurch realisiert sein, dass das erste und das zweite Gehäuseelement jeweils eine einander entsprechende und den ersten bzw. zweiten Teilfugensprung ausbildende Stufe - oder auch mehrere Stufen, beispielsweise ähnlich einer Treppe, - aufweisen ("doppeltgestufte Teilfuge").

Auch können die unterschiedlichen Niveaus bzw. kann der Teilfugensprung durch anders ausgebildete bzw. geformte Übergangsstellen, wie geneigte, geradlinig an- oder absteigende und/oder gebogene bzw. gerundete Verläufe in den zwei sich entsprechenden Gehäuseelementen, realisiert werden.

Der erfindungsgemäße "doppelte Teilfugensprung" in der Teilfuge ermöglicht so, dass in der Teilfuge (zumindest) drei unterschiedliche horizontale Ebenen ausgebildet sind, welche jeweils für eine Lagerung von einer der Wellen, d.h. der Großradwelle und der mindestens zwei, mit dem Großrad im Eingriff stehenden Ritzelwellen, auf unterschiedlichen horizontalen Niveaus bzw. in unterschiedlichen horizontalen Ebenen in einer einzigen Teilfuge genutzt werden können.

D.h., durch die so gewonnenen bzw. erzeugten (Gestaltungs-) Freiheitsgrade in der Teilfuge müssen - in den entsprechenden Aufnahmen an den Gehäuseelementen - die mindestens zwei Ritzelwellen nicht mehr in einer Ebene zueinander und zur Großradwelle angeordnet werden - und können bzw. können deren Wellenachsen (aufgeteilt auf die drei unterschiedlichen Niveaus/Ebenen) in der Art angeordnet werden, dass Bauraum zwischen (außen angeordneten,) strömungsführenden Bauteilen, wie Spiralgehäuse, vermittelt werden kann.

Dadurch kann Bauraum zwischen den strömungsführenden Bauteilen bzw. den Spiralgehäusen optimal verteilt werden, was Auslegung und/oder Montage des teilbaren Gehäuses vereinfacht. Neben einer Verbesserung bei einer ein solches Gehäuse nutzenden Fluidmaschine wird so auch eine Anzahl von möglichen diesbezüglichen Varianten in einer Planungsphase erhöht.

Sind die mindestens zwei Ritzelwellen in den (durch die Teilfugensprünge erzeugten) unterschiedlichen Ebenen/Niveaus in der Teilfuge und im Eingriff mit dem Großrad angeordnet, so wird dadurch die Anordnung der mindestens zwei Ritzelwellen in einer einzigen Teilfuge bei gleichzeitig unterschiedlichen Ritzelwellenmittenpositionen ermöglicht. Die Teilkreise der mindestens zwei Ritzelwellen müssen nur noch den Teilkreis des Großrades berühren (, was aufgrund der Teilfugensprünge in beliebig unterschiedlichen Höhen erfolgen kann); die bisherige Forderung, nach der die Ritzelwellenmittelpunkte der mindestens zwei, mit dem Großrad im Eingriff stehenden Ritzelwellen in einer gleichen horizontalen Ebene liegen (ungeteilte und waagrechte Teilfuge), kann entfallen.

Die Aufnahme der mindestens zwei Ritzelwellen in einer einzigen Teilfuge ist so auch aus Kosten- und Montagegründen vorteilhaft - und wird über die Teilfugensprünge weiter genutzt; über die realisierbaren unterschiedlichen Ritzelwellenmittenpositionen lassen sich - aufgrund der dadurch erweiterten Bauraummöglichkeiten - unterschiedliche Übersetzungsverhältnisse (Variabilität der Übersetzungen) - beispielsweise ohne Aufwand einer Mehrfachverzahnung am Großrad - im Getriebe realisieren. Vereinfacht ausgedrückt, die Erfindung ermöglicht so die zusätzlichen (Gestaltungs- )Freiheitsgrade bei der Ausgestaltung, welcher für die Realisierung von unterschiedlichen Übersetzungsverhältnissen genutzt werden kann.

Bei der erfindungsgemäßen Fluidmaschine, wie beispielsweise einer Turbine, einem Turboverdichter, einem mehrstufigen Getriebekompressor oder einer Pumpe, ist dieses teilbare Gehäuse vorgesehen. In dem teilbaren Gehäuse ist dann ein Getriebe mit einer Großradwelle und mit mindestens zwei mit einem auf der Großradwelle angeordneten Großrad im Eingriff stehenden Ritzelwellen aufgenommen, beispielsweise beiderseits der Großradwelle, wobei die mindestens zwei Ritzelwellen und die Großradwelle in den Aufnahmen an den Gehäuseelementen in der Teilfuge aufgenommen sind.

Um im Eingriff mit dem Großrad zu stehen, berühren die Teilkreise der beiden Ritzelwellen den Teilkreis des Großrades - allerdings in unterschiedlicher horizontaler Höhe, d.h. die Ritzelwellenmittenpositionen liegen - aufgrund des ersten und des zweiten Teilfugensprungs - in unterschiedlichen horizontalen Ebenen/Niveaus.

Zumindest eine (Dreh-)Achse der beiden (Dreh-)Achsen der zumindest zwei Ritzelwellen kann dabei unterhalb einer (Dreh-) Achse der Großradwelle in dem teilbaren Gehäuse angeordnet sein. Insbesondere beide (Dreh-)Achsen der mindestens zwei Ritzelwellen können unterhalb der (Dreh-)Achse der Großradwelle angeordnet sein. Dadurch steht so mehr Bauraum oberhalb der (Dreh-)Achse der Großradwelle in dem teilbaren Gehäuse zur Verfügung, beispielsweise für weitere, mit dem Großrad - oder einem weiteren, insbesondere mit dem vorgenanntem Großrad gekoppelten bzw. im Eingriff stehenden Großrad - im Eingriff stehenden Ritzelwellen.

Die Vorteile des erfindungsgemäßen Gehäuses ergeben sich so entsprechend für die erfindungsgemäße Fluidmaschine.

Bevorzugte Weiterbildungen der Erfindung ergeben sich auch aus den abhängigen Ansprüchen und beziehen sich auf das teilbare Gehäuse wie auch auf die Fluidmaschine.

Nach einer besonders bevorzugten Weiterbildung ist vorgesehen, dass der erste und/oder der zweite Teilfugensprung als bzw. jeweils als geradlinig verlaufende vertikale Stufe ausgebildet ist/sind. Anders ausgedrückt, das erste und das zweite Gehäuseelement weisen jeweils eine zueinander entsprechende und den ersten und/oder den zweiten Teilfugensprung ausbildende vertikale Stufe auf.

Derartige Stufen in den Gehäuseelementen können beispielsweise durch entsprechende Gussverfahren bei Stahl eingegossen und/oder bei Stahlteilen (nach-)bearbeitet werden.

Weiterbildend kann auch vorgesehen sein, dass ein durch einen der Teilfugensprünge ausgebildeter Höhenunterschied (kurz auch nur Sprunghöhe) der zwei unterschiedlichen horizontalen Niveaus in Abhängigkeit von Abmessungen der Wellen und/oder auf den Wellen angeordneten Ritzel und/oder in Abhängigkeit von einer Bauraumanforderung festgelegt ist.

Auch kann - insbesondere bei komplementär ausgebildeten zwei Teilfugensprüngen - weiterbildend vorgesehen sein, dass die Sprunghöhen bei dem ersten und dem zweiten Teilfugensprung gleich bzw. im Wesentlichen gleich bemessen sind.

Nach einer weiteren Weiterbildung ist vorgesehen, dass die Aufnahmen für die zwei Ritzelwellen beiderseits der Aufnahme für die Großradwelle an den Gehäuseelementen in der Teilfuge (auf den durch die Teilfugensprünge ausgebildeten drei unterschiedlichen Ebenen/Niveaus) angeordnet sind. Anschaulich gesehen, die Ritzelwellenaufnahmen liegen nicht (mehr) in der Ebene der Großradwellenaufnahme.

Ist hier weiterbildend dann auch vorgesehen, dass die Teilfugensprünge komplementär - beispielsweise als "auf den Kopf gestellter "U"-förmiger Verlauf - ausgebildet sind, so können die Ritzelwellenaufnahmen (und so auch die Ritzelwellen) in der Teilfuge (bezüglich der Großradwellenaufnahme bzw. der Großradwelle) nach unten "wandern", wodurch so Bauraum oberhalb dieser, beispielsweise in einer oberen, weiteren Teilfuge, gewonnen werden kann.

In dieser weiteren - gegebenenfalls auch (ein- oder mehrfach) gestuften oder auch ungestuften - Teilfuge können so dann mehrere Aufnahmen für weitere Ritzelwellen vorgesehen sein. Hierdurch kann eine - sonst als Steckritzelwelle vorgesehene - Ritzelwelle in diese weitere Teilfuge "verlagert" werden, wodurch eine aufwändige Steckritzelwellenanordnung entfallen kann.

Auch eine Zugänglichkeit und Montage von in den Teilfugen aufgenommenen Ritzelwellen vereinfacht sich gegenüber (aufwändig von außen einzusteckenden) Steckritzelwellen.

Nach einer Weiterbildung kann vorgesehen sein, dass der erste und/oder der zweite Teilfugensprung (jeweils) unter Verwendung eines Dichtelements abgedichtet wird, welches eine im Wesentlichen dem (jeweiligen) Teilfugensprung entsprechende Form aufweist.

D.h., das (jeweilige) Dichtelement ist in seiner Form im Wesentlichen dem (jeweiligen) Teilfugensprung angepasst. Es folgt in seiner Form im Wesentlichen dem (jeweiligen) Teilfugensprungverlauf bzw. folgt dem Verlauf der Teilfuge im Bereich des (jeweiligen) Teilfugensprungs/an der (jeweiligen) Übergangsstelle.

"Im Wesentlichen Form entsprechend" kann dabei meinen, dass das Dichtelement kleine bzw. schmale Randzonen aufweisen kann, welche über die Form des Teilfugensprungs hinausreichen, welche aber im Vergleich zur Form des Teilfugensprungs untergeordnet sind, beispielsweise schmale, für eine Verschraubung mit dem Gehäuse bzw. mit den Gehäuseelementen vorgesehene Randbereiche.

D.h., ein Außendurchmesser des Dichtelements ist etwas größer als die Form des Teilfugensprungs.

Vereinfacht und beispielhaft anschaulich ausgedrückt, ist der (jeweilige) Teilfugensprung beispielsweise als - geradlinig verlaufende vertikale oder gegen die Vertikale geneigte - Stufe ausgebildet, so kann das den (bzw. diesen) Teilfugensprung abdichtende Dichtelement - entsprechend des geraden vertikalen bzw. geraden geneigten Verlaufs des (jeweiligen) Teilfugensprungs entsprechend - stab- bzw. riegelförmig ausgebildet sein ("Dichtriegel").

Oder ist der (jeweilige) Teilfugensprung beispielsweise bogenförmig ausgebildet, so kann das den (bzw. diesen) Teilfugensprung abdichtende Dichtelement - entsprechend des gebogenen Verlaufs des Teilfugensprungs - entsprechend gebogen ausgebildet sein.

Einer derartigen Ausgestaltung des Dichtelements liegt die Überlegung und Erkenntnis zugrunde, dass die Form des Dichtelements, insbesondere dessen Außenabmessung, den möglichen Mindestabstand der in der Teilfuge, beiderseits des (jeweiligen) Teilfugensprungs angeordneten Wellen bzw. der an deren Wellenenden angeordneten, strömungsführenden Bauteilen (Spiralgehäusen) - so entsprechend die Gehäuse bzw. deren Baubarkeit und Flexibilität bei realisierbaren Übersetzungsverhältnissen - beeinflusst bzw. begrenzt.

Entspricht so allerdings die Form bzw. die Außenabmessung des Dichtelements im Wesentlichen der Form des (jeweiligen) Teilfugensprungs, so minimiert sich der - bei den jeweiligen Teilfugensprungshöhen - vorzuhaltende (horizontale) Mindestabstand zwischen den Wellen bzw. der an deren Wellenenden angeordneten, strömungsführenden Bauteilen (Spiralgehäusen).

Auch große bzw. nahezu beliebig große vertikale Teilfugensprünge bzw. vertikale Stufen lassen sich so in Teilfugen bei teilbaren Getriebegehäusen realisieren. Die Zahl baubarer Getriebeverdichter bzw. Fluidmaschinen mit solchen Gehäusen erhöht sich; ein "Mehr" an Übersetzungsverhältnissen bei den diesbezüglichen Getrieben sind realisierbar.

Darüber hinaus ist auch für einen effizienten und langlebigen Betrieb des in dem teilbaren Gehäuse aufzunehmenden Getriebes die Abdichtung, insbesondere eine Ölabdichtung beispielsweise im Falle einer im dem Gehäuse realisierten Ölsumpfschmierung, der Teilfuge von großer Bedeutung, was gerade durch das erfindungsgemäße Dichtelement auf einfache, kostengünstige und effiziente Weise realisiert werden kann.

Das diesbezügliche Dichtelement kann so - entsprechend eines weiterbildend vorgesehenen geraden vertikalen Verlaufs des ersten bzw. zweiten Teilfugensprungs entsprechend - stab- bzw. riegelförmig ausgebildet sein ("Dichtriegel"). Ein solcher Dichtriegel baut - wird er entsprechend des als Stufe ausgebildeten ersten bzw. zweiten Teilfugensprungs vertikal (den Teilfugensprung abdichtend) angeordnet - in horizontaler Richtung äußerst kompakt, wodurch der Bauraumbedarf in dieser Richtung kleinstmöglich ist.

Nach einer anderen Weiterbildung ist vorgesehen, dass das Dichtelement aus Metall, insbesondere aus Aluminium, ist.

Weiter, nach einer Weiterbildung, kann vorgesehen sein, dass das Dichtelement über dem ersten bzw. zweiten Teilfugensprung, insbesondere mit den Gehäuseelementen verschraubt und/oder im ersten bzw. zweiten Teilfugensprung versenkt, angeordnet ist.

Die Herstellung eines Dichtelementsitzes am Getriebegehäuse bzw. Teilfugensprung erfolgt bevorzugt beim Ausspindeln der Aufnahmen bzw. Lagersitze (für die Ritzelwellen) und macht keinen weiteren Bearbeitungsschritt notwendig. Durch die versenkte Anordnung des Dichtelements stellt dieses kein Hindernis für angrenzende Bauteile dar; eine Vorrichtung zur Spiraleinstellung bleibt montierbar.

Nach einer besonders bevorzugten Weiterbildung ist vorgesehen, dass das Dichtelement den ersten bzw. zweiten Teilfugensprung völlig abdeckend angeordnet ist.

Nach einer anderen Weiterbildung ist vorgesehen, dass das Dichtelement mindestens eine einseitig offene Aussparung aufweist (offener Schraubensitz), unter Verwendung derer dieses mit einem der Gehäuseelemente verschraubt ist.

Nach einer besonders vorteilhaften Weiterbildung ist vorgesehen, dass das Dichtelement zwei jeweils einseitig offene Aussparungen (zwei offene Schraubensitze) aufweist, unter Verwendung derer das Dichtelement mit den Gehäuseelementen verschraubbar ist. Hierbei ist es weiter auch von besonderem Vorteil, wenn die zwei offenen Schraubensitze an gegenüberliegenden Enden des Dichtelements angeordnet sind.

Ist so beispielsweise der erste bzw. zweite Teilfugensprung als vertikale Stufe in der Teilfuge zwischen den zwei Gehäuseelementen ausgebildet - und durch den - entsprechend vertikal montierten - Dichtriegel abgedichtet, welcher an seinen (gegenüberliegenden) Dichtriegelenden diese zwei offenen Schraubensitze (für die Montageschrauben zur Verschraubung mit dem oberen bzw. unteren Gehäuseelement) aufweist, so kann eine Beschädigung bei einer Demontage eines Gehäuseelements bei einem versehentlich noch montierten Dichtriegel verhindert werden.

Ferner kann, steht beispielsweise - aber nicht notwendigerweise - das Gehäuse unter einem Innendruck, auch vorgesehen sein, mehrere Verschraubungen, beispielsweise (gegebenenfalls umlaufend) im Randbereich des Dichtelements bzw. Dichtriegels und/oder zusätzlich zu den Verschraubungen über die zwei offenen Schraubensitze an den Enden des Dichtelements, für das Dichtelement bzw. Dichtriegel mit den Gehäuseelementen vorgesehen werden.

Ferner kann nach einer Weiterbildung auch vorgesehen sein, dass an dem Dichtelement ein Dichtmittel, insbesondere ein O-Ring (oder auch mehrere O-Ringe) oder eine Rundschnur, angeordnet ist.

Hierzu kann das Dichtelement eine Nut oder einen Fortsatz aufweisen, in welche das Dichtelement eingelegt bzw. an welchem das Dichtelement angeordnet ist bzw. wird. D.h., auf den Fortsatz kann beispielsweise der O-Ring (bzw. die O-Ringe) aufgeschoben sein/werden bzw. um den Fortsatz kann beispielsweise die Rundschnur gewickelt sein/werden bzw. in die Nut kann beispielsweise der O-Ring eingelegt werden.

Liegt dann, wie nach einer besonders bevorzugten Weiterbildung vorgesehen, das dieses Dichtmittel aufweisende Dichtelement in axialen, an den Gehäuseelementen im Bereich des Steilfugensprungs ausgebildeten Aufnahmen ("Dichtelementsitz") axial auf bzw. wird beispielsweise axial am Gehäuse/ an den Gehäuseelementen verschraubt, so ist das Dichtmittel hier axial dichtend, wodurch auf eine Passung zur Zentrierung des Dichtelements im Gehäuse verzichtet werden kann.

Dieses Dichtelement mit diesem (axial aufliegenden) Dichtmittel hat darüber hinaus den Vorteil, dass die Dichtrichtung entgegen der Klemmkraft der Teilverschraubung wirkt. Auch bleiben, unabhängig von der Dichtmittelanordnung am dem Dichtelement, Ausführung und Montage der Teilfugenverschraubung unberührt.

Nach einer weiteren bevorzugten Weiterbildung ist vorgesehen, dass - insbesondere sternförmig um eine Wellenaufnahme angeordnet - Versteifungen bzw. Aussteifungselemente, wie beispielsweise Streben u.ä., an den Gehäuseelementen angeordnet sind. Eine Schwächung des Gehäuses kann hierdurch ausgeglichen werden.

Weiter kann bevorzugt vorgesehen sein, dass das teilbare Gehäuse ein drittes Gehäuseelement aufweist, welches mit dem ersten Gehäuseelement oder mit dem zweiten Gehäuseelement über eine weitere Teilfuge verbunden ist. Diese weitere Teilfuge kann einen oder auch mehrere Teilfugensprünge aufweisen, d.h. insbesondere ein- oder mehrfachgestuft sein; die weitere Teilfuge kann aber auch ohne Teilfugensprung/-sprünge bzw. ungestuft ausgeführt sein.

Auch kann vorgesehen sein, dass weitere Gehäuseanbauten an das teilbare Gehäuse montiert sind, beispielsweise außen angeordnete strömungsführende Bauteile, wie Spiralgehäuse, und/oder Spiralanbindungen.

Nach einer besonders bevorzugten Weiterbildung ist vorgesehen, dass das erste und das zweite Gehäuseelement ein Unterkasten und ein Oberkasten des Getriebegehäuses sind; ist ein drittes Gehäuseelement vorgesehen, so kann dieses ein (Gehäuse-)Deckel bei dem Getriebegehäuse sein.

Auch kann nach einer Weiterbildung vorgesehen sein, dass das erste und das zweite Gehäuseelement über vertikal zueinander versetzte Stufenflächen von die Teilfugensprünge ausbildenden Stufen gegeneinander ausgerichtet und/oder zentriert sind.

Entsprechendes kann auch für ein drittes Gehäuseelement mit gestufter weiterer Teilfuge vorgesehen sein.

Nach einer anderen Weiterbildung ist vorgesehen, dass das erste und das zweite Gehäuseelement miteinander verstiftet und/oder miteinander verschraubt sind. Auch hier kann entsprechendes für ein drittes Gehäuseelement vorgesehen sein. Die Gehäuseelemente können aus Metall, insbesondere Stahl, sein.

Nach einer weiteren besonders bevorzugten Weiterbildung ist vorgesehen, dass das Getriebe mindestens zwei weitere, mit dem Großrad oder einem weiteren Großrad im Eingriff stehende Ritzelwellen aufweist, so beispielsweise für ein (Getriebe-) Gehäuse für einen achtstufigen Getriebeverdichter.

Hier ist es insbesondere zu bevorzugen, dass die mindestens zwei weiteren Ritzelwellen in Aufnahmen an dem zweiten und dem (dann vorzusehenden) dritten Gehäuseelement, beispielsweise einem Oberkasten und einem Deckel, in der (dann vorhandenen) weiteren, insbesondere ungestuften, Teilfuge angeordnet sind.

Vereinfacht und anschaulich ausgedrückt, soll das teilbare Gehäuse für einen achtstufigen Getriebeverdichter (mit vier Ritzel- und einer Großradwelle) geeignet sein, so werden drei Wellenaufnahmen in der doppelt gestuften Teilfuge (dort in den drei unterschiedlichen, durch die Teilfugensprünge ausgebildeten Ebenen/Niveaus) zwischen Unterkasten und Oberkasten vorgesehen, d.h. zwei beiderseits der Aufnahme für die Großradwelle angeordnete Ritzelwellenaufnahmen, und zwei Ritzelwellenaufnahmen in der (gegebenenfalls auch gestuften) weiteren Teilfuge zwischen Oberkasten und Deckel.

Nach einer weiteren besonders bevorzugten Weiterbildung - so insbesondere bei einem dreiteiligen, die Teilfuge und die weitere Teilfuge aufweisenden Gehäuse für ein achtstufiges Getriebe mit einer Großradwelle und vier Ritzelwellen - ist vorgesehen, dass die Teilfugensprünge in der Teilfuge derart ausgebildet - und die weitere Teilfuge als weitere, ungestufte Teilfuge ausgebildet sind, dass die an den Gehäuseelementen in den Teilfugen angeordneten Aufnahmen der mindestens zwei und der mindestens zwei weiteren Ritzelwellen ein Trapez bilden, insbesondere dass die Aufnahmen der mindestens zwei Ritzelwellen und die Aufnahmen der mindestens zwei weiteren Ritzelwellen jeweils Grundseiten des Trapezes ausbilden.

Anschaulich ausgedrückt, Verbindungslinien zwischen den Ritzelwellenaufnahmen bzw. zwischen Ritzelwellenachsen/- mittelpunkten spannen hier ein Trapez auf. Bei bisherigen entsprechenden Gehäusen mit (vierter) Steckritzelwelle steht das entsprechende Polygon auf einer Ecke und baut entsprechend hoch. Die Teilfugensprünge in der Teilfuge bei dem teilbaren Gehäuse führen dazu, dass das dortige Trapez flach auf der Längsseite angeordnet werden kann, wodurch sich ein flacher Bauraum ergibt.

In einer besonders bevorzugten Weiterbildung ist das teilbare Gehäuse Teil einer mehrstufigen Getriebeverdichteranlage, welche acht Stufen (vier Ritzelwellen) mit radialen Laufrädern und Spiralgehäusen aufweist. Die Abdichtung der Kompressorstufen zum teilbaren (Getriebe-)Gehäuse kann durch Kohlerringe erfolgen. Als Antrieb bei der Getriebeverdichteranlage kann ein Elektromotor dienen.

Das teilbare Gehäuse weist hier einen Unterkasten, einen Oberkasten sowie einen Deckel auf. Der Oberkasten und der Unterkasten sind über die "doppelt gestufte", mit den Dichtelementen bzw. mit den Dichtriegeln abgedichtete Teilfuge (erste bzw. untere Teilfuge), d.h. komplementär, als Stufen und mit gleicher Stufenhöhe ausgebildete, mit den Dichtriegeln abgedichtete zwei Teilfugensprünge (in "auf dem Kopf gestellter "U"-förmigen Verlauf) in der Teilfuge, verbunden. Der Deckel und der Oberkasten sind über eine weitere, ungeteilte und waagrechte Teilfuge verbunden (zweite bzw. obere Teilfuge).

Sowohl in der doppelt gestuften Teilfuge als auch in der ungeteilten und waagrechten weiteren Teilfuge sind jeweils zwei Ritzelwellen, welche an den freien Wellenenden mit Turbolaufrädern bestückt sind, angeordnet.

In der doppelt gestuften Teilfuge und zwischen den beiden dort angeordneten Ritzelwellen ist darüber hinaus auch die Welle des Großrades angeordnet.

Durch Einfügen der Teilfugensprünge bzw. Stufen in der ersten/unteren Teilfuge entfällt hier die Bedingung, dass die Ritzelwellen und die Großradwelle in einer Ebene liegen müssen. Damit können die Ritzelwellen der ersten Teilfuge nach unten wandern (auf dem Kopf gestellter "U"-förmiger Verlauf) und so Bauraum in der zweiten/oberen Teilfuge geschaffen werden. Dieser Bauraum in der zweiten/oberen Teilfuge wird genutzt, um eine/die zweite Ritzelwelle (anstelle einer sonstigen Steckritzelwelle) aufzunehmen, wodurch eine aufwändige Steckritzelwellenanordnung entfällt.

Dabei kann die zweite/obere Teilfuge aber auch mit einem Teilfugensprung ausgebildet sein (z.B. gestufte zweite/obere Teilfuge), wodurch hier die beiden Ritzelwellen der bzw. in den zweiten/oberen Teilfugen in unterschiedlichen Ebenen bzw. auf unterschiedlichen Niveaus liegen würden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung von einem oder mehreren Ausführungsbeispielen, das bzw. die im Zusammenhang mit den Figuren näher erläutert wird bzw. werden.

Die Erfindung ist jedoch nicht auf die in dem bzw. den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Funktions-/bauartgleiche bzw. identische Elemente oder Komponenten weisen in den Ausführungsbeispielen bzw. Figuren gleiche Bezugszeichen auf.

Es zeigen
- FIG 1: eine Ansicht (Frontansicht) eines einen Deckel, einen Oberkasten und einen Unterkasten aufweisenden geteilten Gehäuses für ein Getriebe eines mehrstufigen Getriebeverdichters,
- FIG 2: eine Skizze zur Verdeutlichung der Wellenanordnung bei dem geteilten Gehäuse für ein Getriebe eines mehrstufigen Getriebeverdichters aus FIG 1,
- FIG 3: eine räumliche Darstellung des einen Deckel, einen Oberkasten und einen Unterkasten aufweisenden geteilten Gehäuses für ein Getriebe eines mehrstufigen Getriebeverdichters nach der FIG 1,

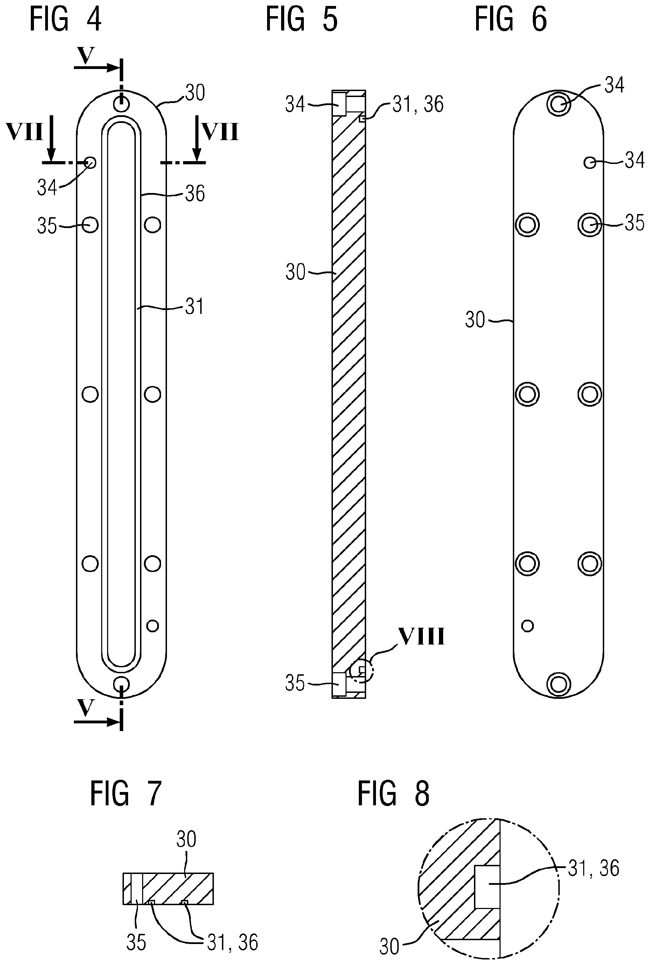

- FIG 4: eine Ansicht (Rückansicht) eines Dichtriegels zur Abdichtung eines Teilfugensprungs bei der Teilfuge zwischen dem Unterkasten und dem Oberkasten des geteilten Gehäuses für ein Getriebe eines mehrstufigen Getriebeverdichters nach den FIGen 1 bis 3,
- FIG 5: eine Ansicht (geschnittene Seitenansicht; Schnittlinie A - A) eines Dichtriegels zur Abdichtung eines Teilfugensprungs bei der Teilfuge zwischen dem Unterkasten und dem Oberkasten des geteilten Gehäuses für ein Getriebe eines mehrstufigen Getriebeverdichters nach den FIGen 1 bis 3,
- FIG 6: eine Ansicht (Frontansicht) eines Dichtriegels zur Abdichtung eines Teilfugensprungs bei der Teilfuge zwischen dem Unterkasten und dem Oberkasten des geteilten Gehäuses für ein Getriebe eines mehrstufigen Getriebeverdichters nach den FIGen 1 bis 3,
- FIG 7: eine Schnittansicht (Schnittlinie B - B nach FIG 4) eines Dichtriegels zur Abdichtung eines Teilfugensprungs bei der Teilfuge zwischen dem Unterkasten und dem Oberkasten des geteilten Gehäuses für ein Getriebe eines mehrstufigen Getriebeverdichters nach den FIGen 1 bis 3 und
- FIG 8: eine Detailansicht (Detail C nach FIG 5) eines Dichtriegels zur Abdichtung eines Teilfugensprungs bei der Teilfuge zwischen dem Unterkasten und dem Oberkasten des geteilten Gehäuses für ein Getriebe eines mehrstufigen Getriebeverdichters nach den FIGen 1 bis 3.

Ausführungsbeispiel: Doppelt gestufte erste Teilfuge bei einem geteilten Getriebegehäuse für ein Getriebe eines mehrstufigen Getriebeverdichters mit mit Dichtriegeln abgedichteten Teilfugensprüngen

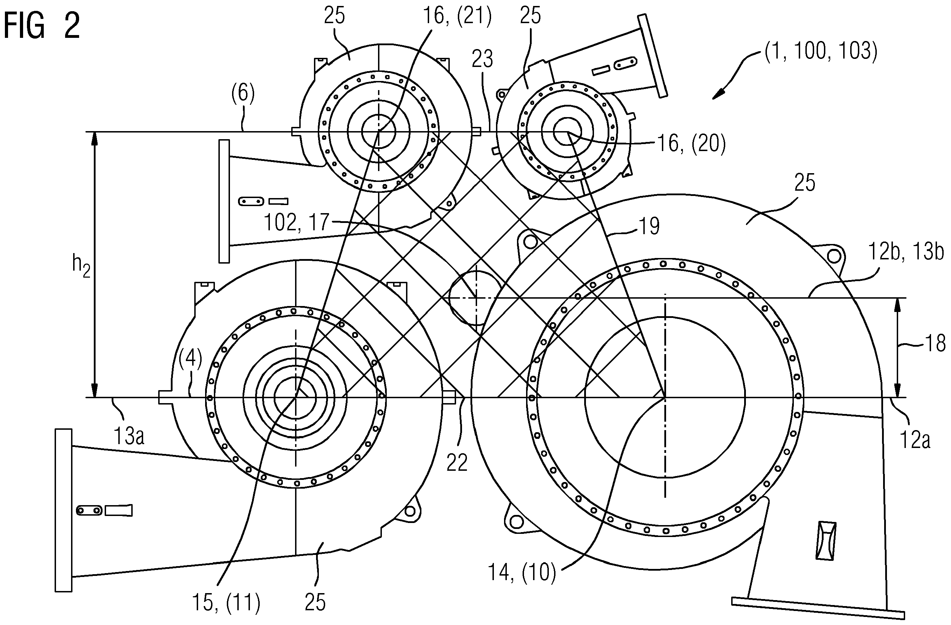

FIGen 1 und 3 (Front- und 3D - Ansicht) sowie FIG 2 (Wellenanordnung) zeigen Ansichten eines geteilten Gehäuses 1 (Getriebegehäuse) mit Unterkasten 2, Oberkasten 3 und Deckel 6 für ein Getriebe 100 eines mehrstufigen Getriebeverdichters, welche für eine Luftzerlegung vorgesehen ist.

Das geteilte Gehäuse 1 weist den dargestellten Unterkasten 2, den dargestellten, über bzw. oberhalb des Unterkastens 2 angeordneten Oberkasten 2 sowie den dargestellten, über bzw. oberhalb des Oberkastens 3 angeordneten Deckel 6 - alle vorzugsweise aus Stahl - auf.

Der Unterkasten 2 und der Oberkasten 3 sind über eine erste, doppelt gestufte, horizontale Teilfuge 4 miteinander verbunden; der Oberkasten 3 und der Deckel 6 sind über eine zweite, waagrechte bzw. horizontale und ungestufte Teilfuge 7 miteinander verbunden.

Der mehrstufige Getriebeverdichter besteht aus acht (Verdichter-)Stufen (A bis H), welche über ein im geteilten Gehäuse 1 aufgenommenes Getriebe 100 mit vier mit einem auf einer Großradwelle 102 angeordneten Großrad 101 des Getriebes 100 im Eingriff stehenden Ritzelwellen A/B 10, C/D 11, E/F 20, G/H 21 des Getriebes 100 realisiert sind. An den freien Enden der vier Ritzelwellen A/B 10, C/D 11, E/F 20, G/H 21 sind Turbolaufräder angeordnet, welche, wie FIG 2 zeigt in - bezüglich des Getriebegehäuses 1 - außen angeordneten Spiralgehäusen 25 (strömungsführende Bauteile) aufgenommen sind.

Alle vier Ritzelwellen A/B 10, C/D 11, E/F 20, G/H 21 sind um das Großrad 101 bzw. Großradwelle 102 angeordnet und stehen über Verzahnungen mit dem Großrad 101 im Eingriff.

Dabei sind die erste A/B 10 und die zweite Ritzelwelle B/C 11 (Stufe 1 bis 4) - in der ersten, doppelt gestuften, horizontalen Teilfuge 4 - beiderseits des Großrades 101 bzw. der Großradwelle 102 angeordnet; die dritte E/F 20 und die vierte Ritzelwelle G/H 21 (Stufe 5 bis 8) sind - in der zweiten, waagrechten bzw. horizontalen und ungestuften Teilfuge 7 - oberhalb des Großrades 101 bzw. der Großradwelle 102 angeordnet.

Um einen effiziente Eingriff der Ritzelwellen A/B 10, C/D 11, E/F 20, G/H 21 zu ermöglichen, sind die Ritzelwellen A/B 10, C/D 11, E/F 20, G/H 21 - bezüglich ihres Abstandes zur Großradwelle 102 - derart angeordnet, dass die Teilkreise der Ritzelwellen A/B 10, C/D 11, E/F 20, G/H 21 jeweils den Teilkreis des Großrades 101 berühren.

Der Antrieb des Großrades 101 bzw. der Großradwelle 102 erfolgt über einen Elektromotor (nicht dargestellt). Die Abdichtung der Kompressorstufen zum Getriebegehäuse 1 erfolgt durch Kohlerringe.

Wie die FIGen 1 und 3 zeigen, weist der Unterkasten 2 an seiner - zusammen mit der Oberseite des Oberkastens 3 die erste, doppelt gestufte zweite, horizontale Teilfuge 4 ausbildenden - Unterseite Aufnahmen 44, 45, d.h. die Wellensitze 44, 45, für die Welle 102 des Großrades 101 (Drehachse der Großradwelle bzw. Großradwellenmittenposition 17) sowie die erste (in Frontansicht rechts der Großradwelle 102 angeordnete) A/B 10 und die zweite (in Frontansicht links der Großradwelle 102 angeordnete) Ritzelwelle C/D 11 ((Drehachsen 14, 15 der Ritzelwellen 10, 11) auf.

Die erste, doppelt gestufte Teilfuge 4 weist, wie die FIGen 1 und 2 zeigen, zwei, komplementäre, gleich hohe Sprungstellen 5a (in Frontansicht rechts der Großradwelle 102 angeordnete rechte Stufe), (in Frontansicht links der Großradwelle 102 angeordnete linke Stufe) 5b ("doppelt gestuft") mit jeweils etwa einer Höhe von ca. 400 mm auf.

Diese stufenartigen Sprungstellen 5a, 5b werden jeweils durch entsprechende Stufen 8 sowohl im Unterkasten 2 des Gehäuses 1 bzw. an deren Oberseite - wie auch entsprechend im Oberkasten 3 des Gehäuses 1 bzw. an deren Unterseite - gebildet.

Sind hier, wie die FIGen 1 bis 3 verdeutlichen, die Teilfugensprünge 5a, 5b bzw. die Stufen 8 komplementär - hier im Speziellen als "auf den Kopf gestellter "U"-förmiger Verlauf - ausgebildet, so wandern hierdurch die Ritzelwellenaufnahmen 40, 41, 42, 43 (und so auch die Ritzelwellen A/B 10, C/D 11 bzw. deren Ritzelwellenmittelpunkte/-positionen 14, 15) in der ersten, doppelt gestuften, horizontalen Teilfuge 4 (bezüglich der Großradwellenaufnahme 44, 45 bzw. der Großradwelle 102 bzw. -wellenmittelpunkt/-position) nach unten, wodurch so Bauraum in der zweiten, waagrechten bzw. horizontalen und ungestuften Teilfuge 7 gewonnen wird.

D.h. auch, wie die FIGen 1 bis 3 verdeutlichen, es liegen die erste A/B 10 und die zweite Ritzelwelle C/D 11 nicht mehr in der gleichen horizontalen Ebene 12b bzw. 13b wie die Großradwelle 102, sondern - entsprechend der ausgebildeten Teilfugensprünge 5a, 5b bzw. Stufe 8 - in abgesenkten, tieferen horizontalen Ebenen 12a und 13a bzw. Höhen 12a, 13a. Nur mehr die Teilkreise von erster A/B 10 und zweiten Ritzelwelle C/D 11 und Großrad 101 berühren sich.

Liegen die erste A/B 10 und die zweite Ritzelwelle C/D 11 (zwar) unterhalb der Großradwelle 102, aber gemeinsam in der ersten, doppelt gestuften, horizontalen Teilfuge 4, ist dies aus Montage- und Kostengründen günstig.

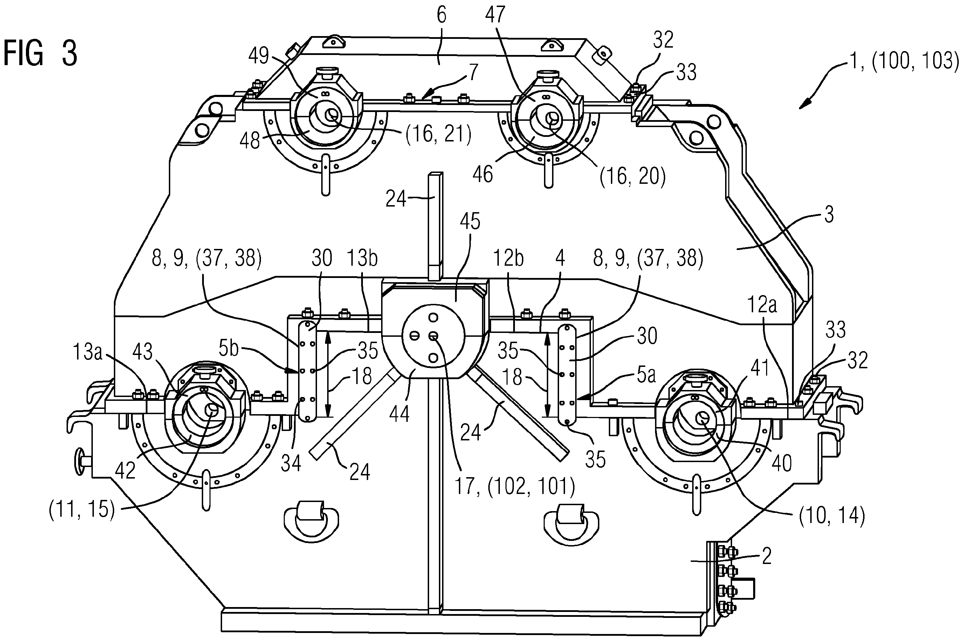

Um eine Ausrichtung von Unterkasten 2 und Oberkasten 3 zu ermöglichen, sind die vertikalen Stufenflächen 9 zueinander versetzt. Der Unterkasten 2 und Oberkasten 3 sind, wie die FIGen 1 und 3 zeigen, durch Zentrierstifte verstiftet 33 und verschraubt 32. Auch der Oberkasten 3 und der Deckel 6 sind, wie FIG 3 zeigt, verstiftet 33 und verschraubt 32.

Wie weiter die FIGen 1 und 3 zeigen, weist der Oberkasten 3 an seiner - zusammen mit der Unterseite des Deckels 6 die zweite, waagrechte bzw. horizontale und ungestufte Teilfuge 7 ausbildenden - Oberseite die Aufnahmen 46, 48, d.h. die Wellen-/Lagersitze 46, 48 für die dritte E/F 20 (in Frontansicht rechts angeordnet) und die vierte Ritzelwelle G/H 21 (in Frontansicht links angeordnet) auf. Die entsprechenden Aufnahmen 47, 49 bzw. Wellen-/Lagersitze 47, 49 für die dritte E/F 20 und die vierte Ritzelwelle G/H 21 sind auch in der Unterseite des Deckels 6 vorgesehen.

Alle zwei Ritzelwellen 20, 21 liegen dabei in einer (gemeinsamen) horizontalen, waagrechten Ebene - gemäß der zweiten, ungestuften und waagrechten Teilfuge 7.

Ist, wie hier möglich, in der zweiten, ungestuften und waagrechten Teilfuge 7 neben der dritten Ritzelwelle E/F 20 auch die vierte Ritzelwelle G/H 21 aufzunehmen, kann eine - sonst als Steckritzelwelle vorzusehende - vierte Ritzelwelle (als aufwändige Steckritzelwellenanordnung) entfallen.

Liegen die dritte E/F 20 und die vierte Ritzelwelle G/H 21 gemeinsam in der zweiten, ungestuften, waagrechten Teilfuge 7, ist dies - u.a. auch wegen der erleichterten Zugänglichkeit - aus Montage- und Kostengründen günstig.

Wie die FIG 2 verdeutlicht, spannen die Ritzelwellen A/B 10, C/D 11, E/F 20, G/H 21 bzw. deren Aufnahmen 40 bis 43, 46 bis 49 bzw. deren Ritzelwellenmittenpositionen 14, 15, 16 (Achsmittelpunkte) ein Trapez 19 auf, deren beiden waagrecht ausgerichteten Grundseiten 22, 23 durch die Ritzelwellen A/B 10 und C/D 11 bzw. deren Aufnahmen 40 bis 43 bzw. deren Ritzelwellenmittenpositionen 14, 15 und durch die Ritzelwellen E/F 20 und G/H 21 bzw. deren Aufnahmen 46 bis 49 bzw. deren Ritzelwellenmittenpositionen 16 (Achsmittelpunkte) gebildet werden.

D.h., das Trapez 19 "liegt flach" auf einer seiner Grundseiten 22, 23 ("Höhe" des Trapez h2), wodurch sich der flache Bauraum ergibt. Bei entsprechenden Gehäusen mit Steckritzelanordnung steht der entsprechende Polygonzug (durch die Wellenmittelpunkte/-aufnahmen) auf einer Ecke und baut entsprechend hoch.

Eine Schwächung des Gehäuses 1 bzw. der Getriebekästen 2, 3 wird durch sternförmig - um die Großradwellenaufnahme 44, 45, an den Getriebekästen 2, 3 - angeordneten Aussteifungen 24 ausgeglichen.
- Abdichtung der ersten, doppelt gestuften, horizontalen Teilfuge 4 durch (zwei) Dichtriegel 30 mit O-Ring 31 (FIGen 1, 2 und 4 bis 8).

Die Schmierung des im Gehäuse 1 angeordneten Getriebes 100 erfolgt durch eine Ölsumpfschmierung, wobei die Ölabdichtung der ersten, doppelt gestuften Teilfuge 4, insbesondere der dortigen zwei Teilfugensprünge 5a, 5b bzw. der Stufen 8 im Unterkasten 2 und dem Oberkasten 3, ein zentrale Bedeutung einnimmt.

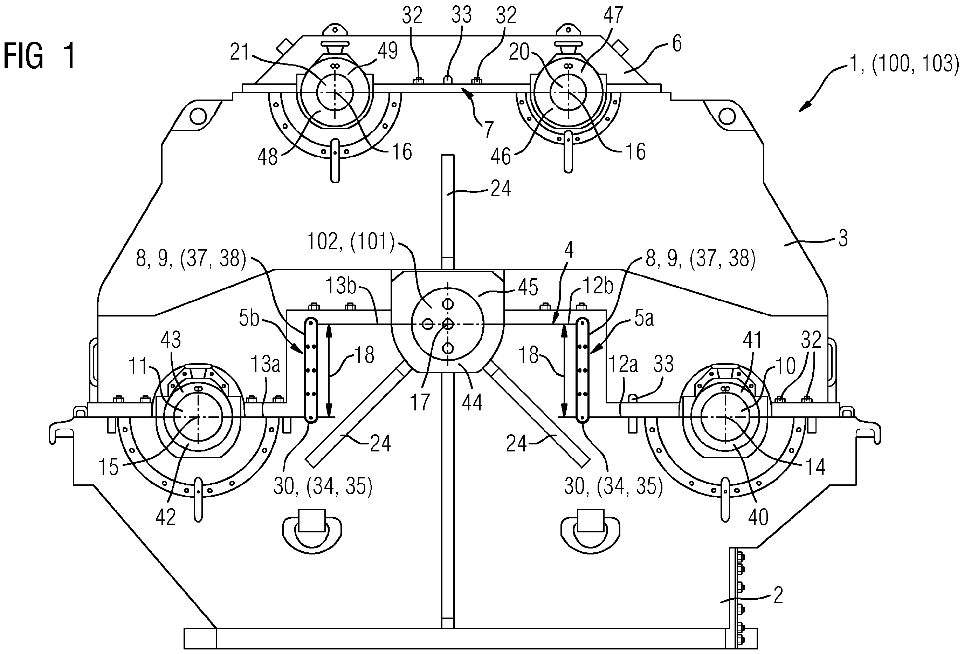

Hierfür sieht, wie insbesondere die FIG 1, FIG 3 und die FIGen 4 bis 8 zeigen, das Getriebegehäuse 1 den Einsatz zweier (in diesem Fall aufgrund der gleichen/komplementären Ausbildung der zwei Teilfugensprünge 5a, 5b bzw. Stufen 8) gleiche Dichtelemente 30, d.h. zwei Dichtriegel 30, vor.

Wie die FIGen 1 und 3 sowie insbesondere die FIGen 4 bis 8 zeigen, handelt es sich bei den Dichtriegel 30 jeweils um ein stabförmiges Bauteil, hier einer Länge von ca. 450 mm und einer Breite von ca. 70 mm, welches der Form des ersten oder zweiten bzw. jeweiligen Teilfugensprungs 5a, 5b bzw. welches in seinem Außendurchmesser der Form des ersten oder zweiten bzw. jeweiligen Teilfugensprungs 5a, 5b entspricht.

Ringförmig, an seinen Rändern umlaufend, weist, wie die FIGen 4 und 6 zeigen, der Dichtriegel 30 Schraubensitze 34, 35 auf, über welche er mit den Unterkasten 2 und dem Oberkasten 3 verschraubt 32 wird.

Zur Abdichtung des jeweiligen Teilfugensprungs 5a, 5b ist an den Dichtriegel 30, wie die FIGen 4 und 5 zeigen, ein Dichtmittel 31, d.h. in diesem Fall ein (die Dichtwirkung erzielender) O-Ring in einer Nut an dem Dichtriegel 30 bzw. an dessen Innenseite eingelegt.

Diese Dichtriegel 30 werden, wie insbesondere die FIGen 1 und 3 zeigen, - jeweils mit dem in der Nut 36 eingelegten O-Ring 31 - von außen über die jeweilige Teilfugenstufe 5a bzw. 5b versenkt geschraubt 32, wobei er die jeweilige Teilfugenstufe 5a bzw. 5b komplett abdeckt.

Dazu sind, wie die FIGen 1 und 3 zeigen, - für jeden Dichtriegel 30 - an den Gehäuseelementen 2, 3 bzw. an dem Unterkasten 2 und dem Oberkasten 3 Aufnahmen 37 (am Unterkasten 2) und 38 (am Oberkasten 3), d.h. ein Dichtriegelsitz 37 (am Unterkasten 2) und ein Dichtriegelsitz 38 (am Oberkasten 3), in Form von axialen Rücknahmen 37, 38 am Unterkasten 2 und am Oberkasten 3, angeordnet, auf welchen der jeweilige Dichtriegel 30, wie insbesondere die FIGen 1 und 2 zeigen bzw. verdeutlichen, (mit seinen Randbereichen) aufliegt.

Die Herstellung der versenkten Dichtriegelsitze bzw. Dichtriegelsitze 37, 38 am Getriebegehäuse 1 bzw. am Unterkasten 2 und am Oberkasten 3 erfolgt beim Ausspindeln der Aufnahmen 40, 41, 42, 43 bzw. Lagersitze 40, 41, 42, 43 der ersten A/B 10 und zweiten C/D Ritzelwelle 11 und macht keinen weiteren Bearbeitungsschritt notwendig.

Durch seine stab- bzw. riegelförmige, dem jeweiligen Teilfugensprung 5a bzw. 5b angepasste und (bei vertikaler Anordnung horizontal kompakt bauenden) Form sowie die (dadurch auch ermöglichte komplett) versenkte Anordnung des jeweiligen Dichtriegels 30 an den Gehäuseelementen 2, 3 stellt dieser kein Hindernis für angrenzende (strömungsführende) Bauteile dar; die Spiralgehäuse 25 sowie die Vorrichtung zur Spiraleinstellung bleibt montierbar, bauen doch die Dichtriegel 30 in horizontaler Richtung äußerst kompakt, wodurch der Bauraumbedarf bzw. eine Bauraumeinschränkung/-behinderung in dieser Richtung kleinstmöglich ist.

Liegt dann der O-Ring 31 des jeweiligen Dichtriegels 30 in den jeweiligen axialen, an den Gehäuseelementen 2, 3 bzw. am Unterkasten 2 und am Oberkasten 3 im Bereich des jeweiligen Steilfugensprungs 5a bzw. 5b ausgebildeten Dichtriegelsitzen 37, 38 bzw. axialen Rücknahmen 37, 38 axial auf bzw. wird axial an den Gehäuseelementen 2, 3 bzw. am Unterkasten 2 und am Oberkasten 3 verschraubt 32, so sind die Dichtriegel 30 hier axial dichtend, wodurch auf eine Passung zur Zentrierung der Dichtriegel 30 in den Gehäuseelementen 2, 3 verzichtet werden kann.

Diese Dichtriegel 30 mit diesen (axial aufliegenden) O-Ringen 31 haben darüber hinaus den Vorteil, dass die Dichtrichtung entgegen der Klemmkraft der Teilverschraubung wirkt. Auch bleiben, unabhängig von der Dichtmittelanordnung, d.h. der Anordnungen der O-Ringe 31, am den Dichtriegel 30, Ausführung und Montage der Teilfugenverschraubung/-verstiftung 32, 33 unberührt.

Obwohl die Erfindung im Detail durch das bzw. die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Teilbares Gehäuse (1) für ein in dem teilbaren Gehäuse (1) aufnehmbares Getriebe (100), insbesondere eines Getriebes einer Fluidmaschine, mit einer Großradwelle (102) und mit mindestens zwei mit einem auf der Großradwelle (102) angeordneten Großrad (101) im Eingriff stehenden Ritzelwellen (10, 11),
wobei das teilbare Gehäuse (1) zumindest ein erstes Gehäuseelement (2) und ein mit dem ersten Gehäuseelement (2) über eine Teilfuge (4) verbundenes, zweites Gehäuseelement (3) aufweist und die Großradwelle (102) und die mindestens zwei Ritzelwellen (10, 11) in Aufnahmen (40, 41, 42, 43, 44, 45) an den Gehäuseelementen (2, 3) in der Teilfuge (4) aufnehmbar sind,
**dadurch gekennzeichnet, dass**
die Teilfuge (4) einen ersten Teilfugensprung (5a) und einen zweiten Teilfugensprung (5b) aufweist,
welche jeweils zwei unterschiedliche horizontale Niveaus (12a, 13a bzw. 12b, 13b) in der Teilfuge (4) ausbilden und welche jeweils zwischen zwei von den Aufnahmen (40, 41, 42, 43, 44, 45) von zwei von den Wellen (10, 11, 102) angeordnet sowie komplementär zueinander ausgebildet sind.

2. Teilbares Gehäuse (1) nach mindestens einem der voranstehenden Ansprüche,
**dadurch gekennzeichnet, dass**
das erste (2) und das zweite Gehäuseelement (3) jeweils eine zueinander entsprechende und einen der Teilfugensprünge (5a, 5b) ausbildende Stufe (8) aufweisen,
insbesondere zwei zueinander entsprechende und die Teilfugensprünge (5a, 5b) ausbildenden Stufen (8) aufweisen.

3. Teilbares Gehäuse (1) nach mindestens einem der voranstehenden Ansprüche,
**dadurch gekennzeichnet, dass**
die Aufnahmen (40, 41, 42, 43) für die zwei Ritzelwellen (10, 11) beiderseits der Aufnahme (44, 45) für die Großradwelle (102) an den Gehäuseelementen (2, 3) in der Teilfuge (4) angeordnet sind.

4. Teilbares Gehäuse (1) nach mindestens einem der voranstehenden Ansprüche,
**dadurch gekennzeichnet, dass**
ein durch einen der Teilfugensprünge (5a, 5b) ausgebildete Höhenunterschied (18) der zwei unterschiedlichen horizontalen Niveaus (12a, 13a bzw. 12b, 13b) in Abhängigkeit von Abmessungen der Wellen (10, 11, 102) und/oder auf den Wellen (10, 11, 102) angeordneten Ritzel (101) und/oder in Abhängigkeit von einer Bauraumanforderung festgelegt ist.

5. Teilbares Gehäuse (1) nach mindestens einem der voranstehenden Ansprüche,
**dadurch gekennzeichnet, dass** der erste und/oder der zweite Teilfugensprung (5a, 5b) unter Verwendung/jeweils unter Verwendung eines Dichtelements (30) abgedichtet ist, welches eine im Wesentlichen dem jeweiligen Teilfugensprung (5a, 5b) entsprechende Form aufweist.

6. Teilbares Gehäuse (1) nach Anspruch 5, **dadurch gekennzeichnet, dass** das Dichtelement (30) ein Dichtriegel (30) ist und/oder dass das Dichtelement (30) aus Metall, insbesondere aus Aluminium, ist.

7. Teilbares Gehäuse (1) nach mindestens einem der Ansprüche 5 bis 6,
**dadurch gekennzeichnet, dass** das Dichtelement (30) über dem Teilfugensprung (5a, 5b),
insbesondere mit den Gehäuseelementen (2, 3) verschraubt (32) und/oder im Teilfugensprung (5a, 5b) versenkt, angeordnet, insbesondere den Teilfugensprung (5a, 5b) völlig abdeckend angeordnet, ist.

8. Teilbares Gehäuse (1) nach mindestens einem der Ansprüche 5 bis 7,
**dadurch gekennzeichnet, dass**
an dem Dichtelement (30) ein Dichtmittel (31), insbesondere ein O-Ring (31), angeordnet ist, wobei insbesondere das Dichtmittel (31) in axialen, an den Gehäuseelementen (2, 3) im Bereich des Teilfugensprungs (5a, 5b) ausgebildeten Aufnahmen (37, 38) axial aufliegt.

9. Teilbares Gehäuse (1) nach mindestens einem der Ansprüche 5 bis 8,
**dadurch gekennzeichnet, dass**
das Dichtelement (30) eine Nut (36) oder einen Fortsatz (36) aufweist, in welcher oder an welchem das Dichtmittel (31) angeordnet ist, insbesondere in welche der O-Ring (31) eingelegt ist oder auf welchen der O-Ring (31) aufgeschoben ist.

10. Teilbares Gehäuse (1) nach mindestens einem der voranstehenden Ansprüche,
**dadurch gekennzeichnet, dass**
das erste (2) und das zweite Gehäuseelement (3) ein Unterkasten und ein Oberkasten des Getriebegehäuses (1) sind und/oder dass das erste (2) und das zweite Gehäuseelement (3) über vertikal zueinander versetzte Stufenflächen (9) von die Teilfugensprünge (5a, 5b) ausbildenden Stufen (8) gegeneinander ausgerichtet und/oder zentriert sind und/oder dass das erste (2) und das zweite Gehäuseelement (3) miteinander verstiftet (33) und/oder miteinander verschraubt (32) sind.

11. Teilbares Gehäuse (1) nach mindestens einem der voranstehenden Ansprüche,
**dadurch gekennzeichnet, dass**
das teilbare Gehäuse (1) ein drittes Gehäuseelement (6) aufweist, welches mit dem ersten Gehäuseelement (2) oder mit dem zweiten Gehäuseelement (3) über eine weitere, insbesondere ungestufte, Teilfuge (7), verbunden ist, insbesondere dass das dritte Gehäuseelement (6) ein Deckel, das erste Gehäuseelement (2) ein Unterkasten und das zweite Gehäuseelement (3) ein Oberkasten des teilbaren Gehäuses (1) sind, wobei das drittes Gehäuseelement (6) mit dem zweiten Gehäuseelement (3) über die weitere, insbesondere ungestufte, Teilfuge (7) verbunden ist.

12. Teilbares Gehäuse (1) nach dem voranstehenden Anspruch, **dadurch gekennzeichnet, dass**
das Getriebe (100) mindestens zwei weitere, mit dem Großrad (101) oder einem weiteren Großrad im Eingriff stehende Ritzelwellen (20, 21) aufweist, wobei die mindestens zwei weiteren Ritzelwellen (20, 21) in Aufnahmen (46, 47, 48, 49) an dem zweiten und dritten Gehäuseelement (3, 6) in der weiteren, insbesondere ungestuften, Teilfuge (7) anordenbar sind.

13. Teilbares Gehäuse (1) nach dem voranstehenden Anspruch, **dadurch gekennzeichnet, dass**
die Teilfugensprünge (5a, 5b) in der Teilfuge (4) derart ausgebildet und die weitere Teilfuge (7) als weitere, ungestufte Teilfuge ausgebildet sind, dass die an den Gehäuseelementen (2, 3, 6) in den Teilfugen (4, 7) angeordneten Aufnahmen (40, 41, 42, 43, 46, 47, 48, 49) der mindestens zwei und der mindestens zwei weiteren Ritzelwellen (10, 11, 20, 21) ein Trapez (19) bilden, insbesondere dass die Aufnahmen (40, 41, 42, 43) der mindestens zwei Ritzelwellen (10, 11) und die Aufnahmen (46, 47, 48, 49) der mindestens zwei weiteren Ritzelwellen (20, 21) jeweils Grundseiten (22, 23) des Trapezes (19) ausbilden.

14. Fluidmaschine (103), insbesondere Turbine, Turboverdichter, mehrstufiger Getriebekompressor oder Pumpe, mit einem teilbaren Gehäuse (1) nach mindestens einem der voranstehenden Ansprüche
und einem in dem teilbaren Gehäuse (1) aufgenommenen Getriebe (100) mit einer Großradwelle (102) und mit mindestens zwei mit einem auf der Großradwelle (102) angeordneten Großrad (101) im Eingriff stehenden Ritzelwellen (10, 11), wobei die mindestens zwei Ritzelwellen (10, 11) und die Großradwelle (102) in den Aufnahmen (40, 41, 42, 43, 44, 45) an den Gehäuseelementen (2, 3) in der Teilfuge (4) aufgenommen sind.

## Claims

1. Divisible housing (1) for a gearing (100) which can be received in the divisible housing (1), in particular of a gearing of a fluid machine, having a large-gear shaft (102) and having at least two pinion shafts (10, 11) which mesh with a large gear (101) arranged on the large-gear shaft (102), wherein the divisible housing (1) has at least one first housing element (2) and one second housing element (3) which is connected to the first housing element (2) via a parting joint (4), and the large-gear shaft (102) and the at least two pinion shafts (10, 11) can be received in receptacles (40, 41, 42, 43, 44, 45) on the housing element (2, 3) in the parting joint (4),
**characterized in that**
the parting joint (4) has a first parting-joint offset (5a) and a second parting-joint offset (5b),
which form in each case two different horizontal levels (12a, 13a and 12b, 13b respectively) in the parting joint (4) and which are arranged in each case between two of the receptacles (40, 41, 42, 43, 44, 45) of two of the shafts (10, 11, 102) and which are of complementary form with respect to one another.

2. Divisible housing (1) according to at least one of the preceding claims,
**characterized in that**
the first (2) and the second housing element (3) have in each case one mutually corresponding step (8) which forms one of the parting-joint offsets (5a, 5b),
in particular two mutually corresponding steps (8) which form the parting-joint offsets (5a, 5b).

3. Divisible housing (1) according to at least one of the preceding claims,
**characterized in that**
the receptacles (40, 41, 42, 43) for the two pinion shafts (10, 11) are arranged to both sides of the receptacle (44, 45) for the large-gear shaft (102) on the housing elements (2, 3) in the parting joint (4).

4. Divisible housing (1) according to at least one of the preceding claims,
**characterized in that**
a height difference (18), formed by one of the parting-joint offsets (5a, 5b), of the two different horizontal levels (12a, 13a and 12b, 13b respectively) is defined in a manner dependent on dimensions of the shafts (10, 11, 102) and/or pinions (101) arranged on the shafts (10, 11, 102) and/or in a manner dependent on a structural space requirement.

5. Divisible housing (1) according to at least one of the preceding claims,
**characterized in that** the first and/or the second parting-joint offset (5a, 5b) is sealed off using/in each case using a sealing element (30) which has a form substantially corresponding to the respective parting-joint offset (5a, 5b).

6. Divisible housing (1) according to Claim 5,
**characterized in that** the sealing element (30) is a sealing bar (30) and/or **in that** the sealing element (30) is composed of metal, in particular of aluminum.

7. Divisible housing (1) according to at least one of Claims 5 to 6,
**characterized in that** the sealing element (30) is arranged over the parting-joint offset (5a, 5b),
in particular in a manner screwed (32) to the housing elements (2, 3) and/or recessed in the parting-joint offset (5a, 5b), in particular so as to completely cover the parting-joint offset (5a, 5b).

8. Divisible housing (1) according to at least one of Claims 5 to 7,
**characterized in that**
a sealing means (31), in particular an O-ring (31), is arranged on the sealing element (30), wherein in particular, the sealing means (31) lies axially in axial receptacles (37, 38) which are formed on the housing elements (2, 3) in the region of the parting-joint offset (5a, 5b).

9. Divisible housing (1) according to at least one of Claims 5 to 8,
**characterized in that**
the sealing element (30) has a groove (36) or a projection (36) in which or on which the sealing means (31) is arranged, in particular into which the O-ring (31) is laid or onto which the O-ring (31) is mounted.

10. Divisible housing (1) according to at least one of the preceding claims,
**characterized in that**
the first (2) and the second housing element (3) are a lower case and an upper case of the gearing housing (1), and/or **in that** the first (2) and the second housing element (3) are oriented and/or centered relative to one another by means of vertically mutually staggered step surfaces (9) of steps (8) which form the parting-joint offsets (5a, 5b), and/or **in that** the first (2) and the second housing element (3) are pinned (33) to one another and/or are screwed (32) to one another.

11. Divisible housing (1) according to at least one of the preceding claims,
**characterized in that**
the divisible housing (1) has a third housing element (6) which is connected to the first housing element (2) or to the second housing element (3) via a further, in particular non-offset, parting joint (7), in particular **in that** the third housing element (6) is a cover, the first housing element (2) is a lower case and the second housing element (3) is an upper case of the divisible housing (1), wherein the third housing element (6) is connected to the second housing element (3) via the further, in particular non-offset, parting joint (7).

12. Divisible housing (1) according to the preceding claim,
**characterized in that**
the gearing (100) has at least two further pinion shafts (20, 21) which mesh with the large gear (101) or with a further large gear, wherein the at least two further pinion shafts (20, 21) can be arranged in receptacles (46, 47, 48, 49) on the second and third housing elements (3, 6) in the further, in particular non-offset, parting joint (7).

13. Divisible housing (1) according to the preceding claim,
**characterized in that**
the parting-joint offsets (5a, 5b) are formed in the parting joint (4), and the further parting joint (7) is formed as a further, non-offset parting joint, such that the receptacles (40, 41, 42, 43, 46, 47, 48, 49), arranged on the housing elements (2, 3, 6) in the parting joints (4, 7), of the at least two and of the at least two further pinion shafts (10, 11, 20, 21) form a trapezoid (19), in particular **in that** the receptacles (40, 41, 42, 43) of the at least two pinion shafts (10, 11) and the receptacles (46, 47, 48, 49) of the at least two further pinion shafts (20, 21) form in each case base sides (22, 23) of the trapezoid (19).

14. Fluid machine (13), in particular turbine, turbocompressor, multi-stage geared compressor or pump, having a divisible housing (1) according to at least one of the preceding claims,
and having a gearing (100) which is received in the divisible housing (1) and which has a large-gear shaft (102) and at least two pinion shafts (10, 11) which mesh with a large gear (101) arranged on the large-gear shaft (102), wherein the at least two pinion shafts (10, 11) and the large-gear shaft (102) are received in the receptacles (40, 41, 42, 43, 44, 45) on the housing elements (2, 3) in the parting joint (4).

## Revendications

1. Carter (1) divisible pour une transmission (100) d'une machine fluidique ayant un arbre (102) de roue et au moins deux arbres (10, 11) de pignon engrènant avec une roue (101) montée sur l'arbre (102) de roue,
dans lequel le carter (1) divisible a au moins un premier élément (2) de carter et un deuxième élément (3) de carter, relié au premier élément (2) de carter par un joint (4), et l'arbre (102) de la roue et les au moins deux arbres (10, 11) de pignon peuvent être reçus dans le joint (4) dans des logements (40, 41, 42, 43, 44, 45) sur des éléments (2, 3) du carter,
**caractérisé en ce que**
le joint (4) a un premier saut (5a) et un deuxième saut (5b),
qui forment respectivement, dans le joint (4), deux niveaux (12a, 13a ou 12b, 13b) horizontaux différents et qui sont disposés chacun entre deux des logements (40, 41, 42, 43, 44, 45) de deux des arbres (10, 11, 102) ainsi qu'en étant constitués de manière complémentaire l'un de l'autre.

2. Carter (1) divisible suivant au moins l'une des revendications précédentes,
**caractérisé en ce que**
le premier (2) et le deuxième éléments (3) du carter ont chacun un échelon (8) correspondant l'un à l'autre et constituant l'un des sauts (5a, 5b) du joint, notamment deux échelons (8) se correspondant l'un à l'autre et constituant les sauts (5a, 5b) du joint.

3. Carter (1) divisible suivant au moins l'une des revendications précédentes,
**caractérisé en ce que**
les logements (40, 41, 42, 43) pour les deux arbres (10, 11) de pignon sont disposés dans le joint (4), de part et d'autre des logements (44, 45) pour l'arbre (102) de roue sur les éléments (2, 3) du carter.

4. Carter (1) divisible suivant au moins l'une des revendications précédentes,
**caractérisé en ce qu'**
une différence (18) de hauteur, formée par l'un des deux sauts (5a, 5b) du joint, des deux niveaux (12a, 13a ou 12b, 13b) horizontaux différents, est fixée en fonction des dimensions des arbres (10, 11, 102) et/ou des pignons (101) montés sur les arbres (10, 11, 102) et/ou en fonction d'une exigence de place de construction.

5. Carter (1) divisible suivant au moins l'une des revendications précédentes,
**caractérisé en ce que**
le premier et/ou le deuxième saut (5a, 5b) du joint est rendu étanche en utilisant un élément (30) d'étanchéité, qui a une forme correspondant sensiblement au saut (5a, 5b) du joint.

6. Carter (1) divisible suivant la revendication 5,
**caractérisé en ce que**
l'élément (30) d'étanchéité est une barre (30) d'étanchéité et/ou **en ce que** l'élément (30) d'étanchéité est en métal, notamment en aluminium.

7. Carter (1) divisible suivant au moins l'une des revendication 5 à 6,
**caractérisé en ce que**
l'élément (30) d'étanchéité est disposé au dessus du saut (5a, 5b) du joint,
en étant notamment vissé (32) aux éléments (2, 3) du carter et/ou noyé dans le saut (5a, 5b) du joint, en recouvrant notamment complètement le saut (5a, 5b) du joint.

8. Carter (1) divisible suivant au moins l'une des revendications 5 à 7,
**caractérisé en ce qu'**
un moyen (31) d'étanchéité, notamment un joint (31) torique, est disposé sur l'élément (30) d'étanchéité, le moyen (31) d'étanchéité s'appliquant axialement dans des logements (37, 38) axiaux formés sur les éléments (2, 3) du carter dans la région du saut (5a, 5b) du joint.

9. Carter (1) divisible suivant au moins l'une des revendications 5 à 8,
**caractérisé en ce que** l'élément (30) d'étanchéité a une rainure (36) ou un prolongement (36), dans lequel ou sur lequel le moyen (31) d'étanchéité est monté, notamment dans lequel le joint (31) torique est inséré ou sur lequel le joint (31) torique est enfilé.

10. Carter (1) divisible suivant au moins l'une des revendications précédentes,
**caractérisé en ce que**
le premier (2) et le deuxième éléments (3) du carter sont un caisson inférieur et un caisson supérieur du carter (1) de la transmission et/ou **en ce que** le premier (2) et le deuxième éléments (3) du carter sont dirigés et/ou centrés l'un par rapport à l'autre par des surfaces (9) décalées verticalement les unes par rapport aux autres d'échelons (8) formant les sauts (5a, 5b) du joint et/ou **en ce que** le premier (2) et le deuxième éléments (3) du carter sont goupillés (33) entre eux et/ou vissés (32) entre eux.

11. Carter (1) divisible suivant au moins l'une des revendications précédentes,
**caractérisé en ce que**
le carter (1) divisible a un troisième élément (6) de carter, qui est relié au premier élément (2) de carter ou au deuxième élément (3) de carter par un autre joint (7), notamment sans échelon, notamment **en ce que** le troisième élément (6) du carter est un couvercle, le premier élément (2) du carter est un caisson inférieur et le deuxième élément (3) du carter est un caisson supérieur du carter (1) divisible, le troisième élément (6) du carter étant assemblé au deuxième élément (3) du carter par l'autre joint (7), notamment sans palier.

12. Carter (1) divisible suivant la revendication précédente,
**caractérisé en ce que**
la transmission (100) a au moins deux autres arbres (20, 21) de pignon engrenant avec la roue (101) ou avec une autre roue,
dans lequel les au moins deux autres arbres (20, 21) de pignon peuvent être montés dans des logements (46, 47, 48, 49) sur le deuxième et le troisième éléments (3, 6) du carter dans l'autre joint (7), notamment sans palier.

13. Carter (1) divisible suivant la revendication précédente,
**caractérisé en ce que**
les sauts (5a, 5b) du joint (4) et l'autre joint (7) en tant qu'autre joint sans palier, sont constitués de manière à ce que les logements (40, 41, 42, 43, 46, 47, 48, 49), disposés dans les joints (4, 7) sur les éléments (2, 3, 6) du carter des au moins deux arbres (10, 11) de pignon et des au moins deux autres arbres (20, 21) de pignon, forment un trapèze (19), notamment **en ce que** les logements (40, 41, 42, 43), des au moins deux arbres (10, 11) de pignon et les logements (46, 47, 48, 49) des au moins deux autres arbres (20, 21) de pignon constituent respectivement des côtés (22, 23) de base du trapèze (19).

14. Machine (103) fluidique, notamment turbine, turbocompresseur, compresseur à engrenage ou pompe, ayant un carter (1) divisible suivant au moins l'une des revendications précédentes
et une transmission (100), qui est reçue dans le carter (1) divisible et qui a un arbre (102) de roue et au moins deux arbres (10, 11) de pignon engrenant avec la roue (101) montée sur l'arbre (102) de la roue, les au moins deux arbres (10, 11) de pignon et l'arbre (102) de la roue étant reçus dans le joint (4) dans les logements (40, 41, 42, 43, 44, 45) sur des éléments (2, 3) du carter.
